# EUROPÄISCHE PATENTANMELDUNG

(11) **EP 2 546 294 A1**
(43) Veröffentlichungstag der Anmeldung: **16.01.2013**
(21) Anmeldenummer: 11005762.7
(22) Anmeldetag: 14.07.2011
(51) Int. Cl.: C08J 11/10, C08J 11/12, C10G 1/10

(54) **Verfahren und Anlage zur Umwandlung von Alt-Gummireifen in wiederverwertbare fluide Stoffe**

(71) Anmelder: NCT GmbH, 30823 Garbsen (DE)
(72) Erfinder: Die Erfindernennung liegt noch nicht vor
(74) Vertreter: Junius, Walther

(57) **Zusammenfassung**

Die Erfindung besteht in einem Verfahren und einer Anlage zur Umwandlung von Alt-Gummireifen und sonstigen unter Verwendung von organischen Stoffen hergestellten unbrauchbar gewordenen Gegenständen sowie Biomassen in wieder- und weiterverwertbare fluide Stoffe, insbesondere Pyrolysegase und flüssige Kraftstoffe. Die Erfindung besteht darin, daß man die thermisch zu zersetzenden Produkte in geschlossenen Reaktoren bei Temperaturen von 450-500 °C in bei diesen Temperaturen gas-oder dampfförmige Produkte zerlegt und das dabei entstehende Gas-Dampf-Gemisch in einer Batterie hintereinander geschalteter Kondensatoren herunter kühlt und dabei in Produkte verschiedenen Siedepunktes zerlegt und diese in getrennten Gefäßen auffängt.

## Beschreibung

Die Erfindung betrifft ein Verfahren und eine Anlage zur Umwandlung von Alt-Gummireifen und sonstigen unter Verwendung von organischen Stoffen hergestellten unbrauchbar gewordenen Gegenständen sowie Biomassen in wieder- und weiterverwertbare fluide Stoffe, insbesondere Heizgase und flüssige Kraftstoffe.

Aus der RU 699 287 ist es bekannt geworden, unter Verwendung eines Pyrolyse-Reaktors oben genannte Stoffe in brennbare Gase zu wandeln und diese dann auch in Kraftstoffe weiter zu verarbeiten. Dieses Verfahren ist wenig umweltfreundlich, arbeitet diskontinuierlich und kommt wegen der Anwesenheit von Sauerstoff. bei der Pyrolyse zu einer schlechten Qualität der erzeugten Produkte.

Die RU 2182684 zeigt eine weitere Möglichkeit der Umwandlung von organische Bestandteile enthaltenden Abfallprodukte in fluide Rohstoffe. Auch diese Anlage läuft nicht kontinuierlich, sondern muß wegen Reinigungsarbeiten immer wieder unterbrochen werden, die insbesondere wegen sich ansetzender Harze notwendig sind.

Die Erfindung vermeidet die Nachteile der Erfindung und schafft eine kontinuierlich arbeitende, völlig in sich geschlossene und daher umweltfreundliche Anlage, die die Anteile des fluiden Produktes sicher und sauber trennt.

Das erfindungsgemäße Verfahren besteht darin, daß man in einem Pyrolyse-Verfahren nicht brennbare und sich nicht zersetzende feste Bestandteile von organischen thermisch zu zersetzenden Produkte in geschlossenen Reaktoren trennt und diese thermisch zu zersetzenden Produkte in Abwesenheit von Sauerstoff bei Temperaturen von 450-500 °C in bei diesen Temperaturen gas- oder dampfförmige Produkte zerlegt und das dabei entstehende Gas-Dampf-Gemisch in einer Batterie hintereinander geschalteter Kondensatoren herunter kühlt und dabei in Produkte unterschiedlicher Siedepunkte zerlegt und diese in getrennten Gefäßen auffängt. Dabei ist es auch möglich, zunächst die Gesamtheit der erzeugten Pyrolyse-Produkte herunter zu kühlen und dann eine fraktionierte Destillation durchzuführen.

Dazu benutzt man eine in sich geschlossene Anlage, die aus drei Vorrichtungen besteht, einer aus mehreren Reaktoren bestehenden Vorrichtung, in denen die thermisch zu spaltendenden Produkte bei Temperaturen von 450-500 °C in gas- und/oder dampfförmige Produkte zerlegt werden, einer zweiten aus einer Batterie hintereinander geschalteter Kondensatoren bestehenden Vorrichtung, in der das entstandene Gas-Dampf-Gemisch herunter gekühlt wird und dabei in Produkte verschiedener Siedepunkte zerlegt wird, an die verschiedene Gefäße zum Auffangen der zerlegten Produkte angeschlossen sind. Zwischen diese beiden Vorrichtungen ist als dritte noch eine die Pyrolyse-Produkte reinigende Vorrichtung geschaltet, die vor allem Staub aus den Gasen abzieht.

Diese in sich geschlossene Anlage arbeitet umweltfreundlich, weil keines der Produkte oder Zwischenprodukte irgendwo aus der Anlage entweichen kann.

Diese Anlage arbeitet kontinuierlich, weil man das Verfahren in jeweils mindestens einem von mehreren parallel geschalteten Reaktoren durchführt, während gleichzeitig aus einem anderen Reaktor unvergasbare Teile seiner Beschickung entfernt werden und ein weiterer Reaktor erneut beschickt und für die Vergasung vorbereitet und bereit gestellt wird.

Diese Anlage eignet sich insbesondere für die Verarbeitung der besonders schwierig zu entsorgenden Altgummireifen, die bei ihrer Erhitzung einen besonders penetranten Geruch und gesundheitsgefährdendes Gas bilden. Weil diese Altgummireifen sehr voluminös sind, zerkleinert man die Altgummireifen vor ihrer Beschickung in einen Reaktor mitsamt der in ihnen eingearbeiteten Metall- oder sonstigen Teile und nicht vergasbaren Bestandteile.

Um in den Reaktoren verbliebene nicht vergasbare Teile, wie Metallteile, anorganische Zuschlagstoffe oder technischen Kohlenstoff aus den Reaktoren zu entfernen, ist es zweckmäßig, daß die Reaktoren im Bereich ihres Bodens mit einer Reinigungsöffnung versehen sind.

Für einen automatisierten Betrieb der Anlage ist es zweckmäßig, daß im oberen Teil der Reaktoren Sensoren für die Feststellung der Anwesenheit von Wasserstoff und/oder Sauerstoff in gefährlichen Konzentrationen im Reaktor angeordnet sind., um bei Gefahr die Anlage oder zumindest den gefährdeten Reaktor selbsttätig sich abschalten zu lassen.

Auch ist es für eine automatische Betriebsführung zweckmäßig, daß Sensoren zur Überwachung der Temperaturen in und an den Reaktoren, an den Kondensatoren sowie am Eingang und Ausgang einer Kühlmittelzuführung in der Anlage vorgesehen sind.

Da man während des Betriebes nicht in die Reaktoren hineinschauen kann, ist es vorteilhaft, daß zur Prozeßüberwachung Sensoren für das Gewicht der Reaktoren vorgesehen sind. An dem sich während des Betriebes minderndem Gewicht eines Reaktors kann man den Fortschritt der Zersetzung der Beschikkung abschätzen.

Für das Anlaufen des Betriebes und für dessen Ablauf ist es von Vorteil, daß in der Anlage zwei Beheizungsvorrichtungen vorgesehen sind, eine arbeitet bei Arbeitsbeginn jedes Reaktors bis zur Erreichung der Zersetzungstemperatur der in den Reaktor geladenen Beschickung und wird vorzugsweise mit flüssigem Reaktionsprodukt betrieben, die andere arbeitet im Zersetzungsbetrieb der Beschickung und hält den Reaktor auf Betrriebstemperatur, vorzugsweise mit gasförmigem Reaktionsprodukt betrieben,

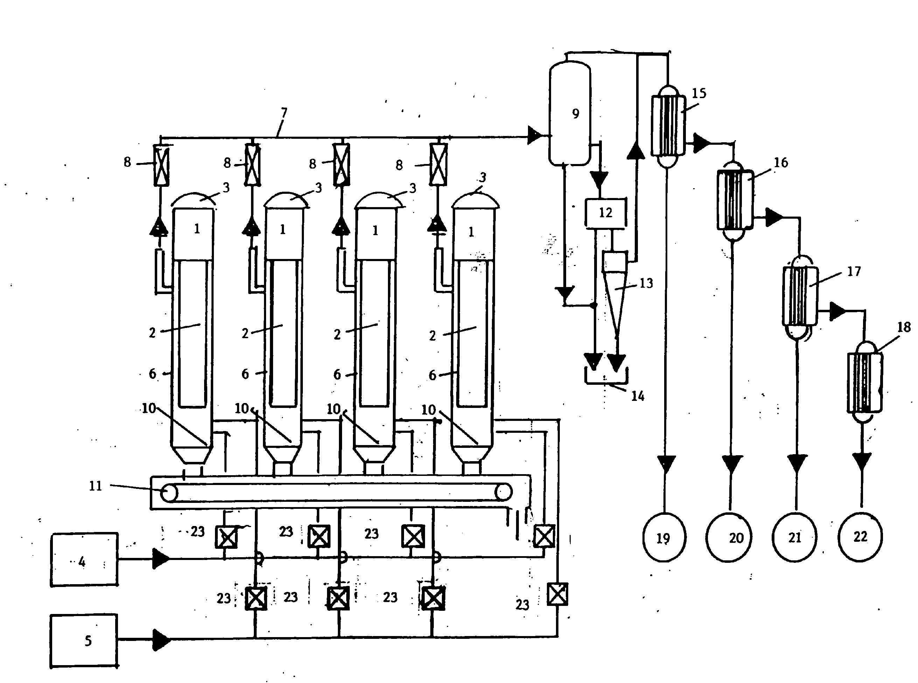

Das Wesen der Erfindung ist nachstehend an Hand eines in der Zeichnung schematisch dargestellten Ausführungsbeispieles einer Autoreifen-Entsorgungsanlage näher erläutert.

Die Anlage der Erfindung besteht aus drei Teilen, der links dargestellten Pyrolyseanlage und der rechts dargestellten Anlage zur fraktionierten Kondensation der in der Pyrolyseanlage erzeugten Gase und Dämpfe sowie der in der Mitte zwischen diesen beiden Vorrichtungen angeordneten Reinigungsvorrichtung.

Die die Reifen in Gase, Dämpfe und feste Teile zerlegende Pyrolyseanlage besteht aus mehreren Reaktoren 1, deren Beschikkungskammern 2 mit zerschnittenen Autoreifen mitsamt der in ihnen als Einlage vorhandener Metallteile gefüllt werden. Nach dem Beschickungsvorgang wird die Beschickungskammer 2 durch einen Deckel 3 hermetisch dicht verschlossen. Sodann werden in der Brennkammer 4 und/oder 5 erzeugte heiße Rauchgase oder erzeugter Dampf oder deren Gemisch über Ventile 23 in einen mit Gummireifenteilen beschickten Reaktor 1 oder dessen Mantel 6 geleitet, wo sich die organischen Teile des Gummis der Reifenteile bei einer Temperatur von 450 bis 500° zu einem Gas oder Gas-Dampfgemisch zersetzen, das seinerseits wegen seiner organischen Anteile brennbar ist, aber auch hier noch gasförmige, bei niedrigeren Temperaturen zu verflüssigende Anteile enthält oder enthalten kann, die man als Kraftstoffe weiterverwerten kann.

Das im Reaktor 1 aus den Reifenteilen entstehende Gas-Dampfgemisch wird zur Trennung in seine Bestandteile und weiteren Verwertung dieser Bestandteile in die rechts in der Zeichnung dargestellte Anlage zur fraktionierten Kondensation oder Destillation überführt.

Die Anlage besteht aus mehreren Reaktoren 1, um kontinuierlich arbeiten zu können. Wenn in einem der Reaktoren 1 die Vergasung der Gummireifenteile stattfindet, entleert man aus einem anderen die nach der Vergasung verbliebenen Metall- und sonstigen nicht vergasbaren festen Teile. Einen dritten Reaktor befüllt man mit einer neuen Charge von Gummireifenteilen. Da die einzelnen Reaktoren 1 an eine ihnen allen gemeinsame Gasabführungsleitung 7 über Ventile 8 angeschlossen sind, wird der jeweils im Vergasungsbetrieb befindliche Reaktor 1 durch Öffnung des ihm zugeordneten Ventils 8 an die Gasabführungsleitung angeschlossen, die die erzeugten Gase in einen Skrubber 9 führt. Nach Beendigung der Vergasung in einem der Reaktoren 1 wird das ihm zugeordnete Ventil wieder verschlossen und das einem weiteren, gerade in den Vergasungsbetrieb gehenden Reaktor 1 zugeordnete Ventil geöffnet. Auf diese Weise erfolgt die Gasherstellung kontinuierlich, zusätzlich kann der Skrubber 9 auch als Sammelbehälter für die erzeugten Gase und Dämpfe dienen und als zwischengeschalteter Speicher vorgesehen sein.

Nahezu alle organischen Komponenten der in die Beschickungskammern 2 verbrachten Reifenteile werden durch die dort stattfindende Erhitzung zu Gasen oder Gas-Dampfgemischen umgesetzt. Diese werden ausnahmslos einer fraktionierten Kondensation oder Destillation unterworfen. Anorganische Reste, wie die Metallteile des Gürtels, verbleiben in den Reaktoren und werden vor der nächsten Befüllung eines Reaktors 1 durch die im Betrieb verschlossene Öffnung eines Bodenauslasses 10 auf ein unter den Reaktoren 1 laufendes Förderband 11 zur Weiterverartung verbracht.

Das in den Skrubber bzw. Sammelbehälter 9 verbrachte Dampf-Gasgemisch aus der Pyrolyse bedarf der Reinigung, in erster Linie von mitgerissenen Staubteilchen, vor der Fraktionierung. Diese Reinigung erfolgt in der Filteranlage 12 und dem Zyklon 13. Der gewonnene Staub wird in einem Abfallbehälter gesammelt und ausgetragen.

Die rechts des Skrubbers 9 in der Zeichnung dargestellte Anlage zur fraktionierten Kondensation des heißen Gas-Dampfgemisches aus den Reaktoren 1 besteht aus einem Gasreiniger, aus dem das von Staub gereinigte heiße Gasgemisch in die Kondensatoren 15, 16, 17 und 18 geleitet wird. Der die jeweils heißeste Fraktion abscheidende Kondensator 15 führt die abgeschiedene Fraktion in einen Sammelbehälter 19, die nicht abgeschiedenen Fraktionen in den an seinen Ausgang gekoppelten Kondensator 16 mit der nächst niedrigeren Abscheidungstemperatur, und so fort. So erhält man Flüssigkeiten von verschiedenen Siede- bzw. Vergasungstemperaturen, die man zumindest zu Verbrennungszwecken weiterbenutzen kann und hat damit das schwierige Problem der Altgummi-Entsorgung gelöst, gleichzeitig aber brennbare fluide Stoffe gewonnen, die nicht nur für die Beheizung der Reaktoren 1 ausreichen, sondern einen Überschuß aufweisen, der anderweitig für Heizzwecke oder anderes genutzt werden kann.

Im Boden 10 der Reaktoren 1 befindet sich eine zu öffnende Klappe, die der Entleerung nicht vergaster Teile der Altgummbeschickung dient und die Entsorgung der auf das Förderband 11 fallenden unvergasten Teile der Beschickung dient.

Besondere Vorteile dieser Anlage sind - die Umweltfreundlichkeit der Anlage, die mit in sich hermetisch von der Aussenwelt abgeschlossenen Reaktoren, Rohrsystemen, Kondensatoren und das Produkt auffangenden Behältern arbeitet,
- das kontinuierliche Arbeiten der Anlage, so daß diese Anlage mit ihre Produkte weiterverarbeitenden, ebenfalls kontinuierlich arbeitenden Anlagen zusammen in einer kontinuierlichen Produktionsstraße zusammen gestellt werden kann,
- die einfache Art der sonst so schwierigen Entsorgung verbrauchter alter Gummiteile.
- die Gewinnung von als Brennstoff und Chemierohstoff weiterverwertbarem Gas und Treibstoff.
- Die Entlastung von Mülldeponie-Kapazität.

Liste der Bezugszeichen
- 1: Reaktor
- 2: Vergasungskammer
- 3: Deckel
- 4: Heißgaserzeuger
- 5: Heißgaserzeuger
- 6: Mantel des Reaktors
- 7: Gasabführungsleitung
- 8: Ventil
- 9: Skrubber und/oder Sammelbehälter
- 10: Boden
- 11: Förderband
- 12: Staubfilter
- 13: Zyklon
- 14: Staubsammelbehälter
- 15: Kondensator
- 16: Kondensator
- 17: Kondensator
- 18: Kondensator
- 19: Sammelbehälter
- 20: Sammelbehälter
- 21: Sammelbehälter
- 22: Sammelbehälter
- 23: Ventil

## Patentansprüche

1. Verfahren zur Umwandlung von Alt-Gummireifen in wiederverwertbare fluide Stoffe,
**dadurch gekennzeichnet,**
**daß** man die Altgummireifen in geschlossenen Reaktoren bei Temperaturen von 450-500 °C in bei diesen Temperaturen gas-oder dampfförmige Produkte zerlegt und das dabei entstehende Gas-Dampf-Gemisch in einer Batterie hintereinander geschalteter Kondensatoren herunter kühlt und dabei in Produkte verschiedenen Siedepunktes zerlegt und diese in verschiedenen Gefäßen auffängt.

2. Verfahren nach Anspruch 1,
**dadurch gekennzeichnet,**
**daß** man das Verfahren in jeweils einem von mehreren parallel geschalteten Reaktoren durchführt, während gleichzeitig aus einem anderen Reaktor unvergasbare Teile seiner Beschickung entfernt werden und ein weiterer Reaktor erneut beschickt wird.

3. Verfahren nach Anspruch 1,
**dadurch gekennzeichnet,**
**daß** man die Altgummireifen vor ihrer Beschickung in einen Reaktor mitsamt in ihnen eingearbeiteter Metall- oder sonstiger Teile zerkleinert.

4. Anlage zur Umwandlung von Alt-Gummireifen in wiederverwertbare fluide Stoffe,
**dadurch gekennzeichnet,**
**daß** die Anlage aus zwei Vorrichtungen besteht,
einer aus mehreren Reaktoren bestehenden Vorrichtung, in denen die Altgummireifen bei Temperaturen von 450-500 °C in gas-oder dampfförmige Produkte zerlegt werden und
einer zweiten aus einer Batterie hintereinander geschalteter Kondensatoren bestehender Vorrichtung, in der das entstandene Gas-Dampf-Gemisch herunter gekühlt wird und dabei in fluide Produkte ver-schiedenen Siedepunktes zerlegt wird, an die verschiedene Gefäße zum Auffangen der zerlegten Produkte angeschlossen sind.

5. Anlage nach Anspruch 4,
**dadurch gekennzeichnet,**
**daß** die Reaktoren parallel geschaltet sind und wenigstens einer von diesen in Betrieb ist, während die anderen im Zustand der Entleerung unvergasbarer Gegenstände oder während der Befüllung sind.

6. Anlage nach Anspruch 4,
**dadurch gekennzeichnet,**
**daß** der Beschickungsvorrichtung eine Reifenzerkleinerungsvorrichtung vorgeschaltet ist.

7. Anlage nach Anspruch 4,
**dadurch gekennzeichnet,**
**daß** der Beschickungsvorrichtung eine Verpackungsvorrichtung zerkleinerter Reifenteile in Säcke oder Pakete vorgeschaltet ist.

8. Anlage nach Anspruch 4 und 6,
**dadurch gekennzeichnet,**
**daß** die Reaktoren im Bereich Ihres Bodens mit einer Reinigungs- und/oder Entladeöffnung für nicht vergasbare Teile der Beschikkung versehen sind.

9. Anlage nach Anspruch 4,
**dadurch gekennzeichnet,**
**daß** im oberen Teil der Reaktoren Sensoren für die Feststellung der Anwesenheit von Wasserstoff und/oder Sauerstoff in gefährlichen Konzentrationen im Reaktor angeordnet sind.

10. Anlage nach Anspruch 4,
**dadurch gekennzeichnet,**
**daß** Sensoren zur Überwachung der Temperaturen in und an den Reaktoren, an den Kondensatoren sowie am Eingang und Ausgang einer Kühlmittelzuführung in der Anlage vorgesehen sind.

11. Anlage nach Anspruch 4,
**dadurch gekennzeichnet,**
**daß** zur Prozeßüberwachung Sensoren für das Gewicht der Reaktoren vorgesehen sind.

12. Anlage nach Anspruch 4,
**dadurch gekennzeichnet,**
**daß** in der Anlage zwei Beheizungsvorrichtungen vorgesehen sind,
eine arbeitet bei Arbeitsbeginn jedes Reaktors bis zur Erreichung der Zersetzungstemperatur der in den Reaktor geladenen Beschickung und wird vorzugsweise mit flüssigem Reaktionsprodukt betrieben,
die andere arbeitet im Zersetzungsbetrieb der Beschickung und hält den Reaktor auf Betrriebstemperatur, vorzugsweise mit gasförmigem Reaktionsprodukt betrieben,
